# EUROPÄISCHE PATENTSCHRIFT

(11) **EP 3 527 076 B1**
(45) Veröffentlichungstag und Bekanntmachung des Hinweises auf die Patenterteilung: **14.06.2023**
(21) Anmeldenummer: 19157734.5
(22) Anmeldetag: 18.02.2019
(51) Int. Cl.: A01M 29/10, A01M 29/16

(54) **WILDWARNSYSTEM**
WILDLIFE WARNING SYSTEMS
SYSTÈME D'AVERTISSEMENT POUR LES ANIMAUX SAUVAGES

(30) Priorität: 20.02.2018 AT 501542018
(43) Veröffentlichungstag der Anmeldung: 21.08.2019
(73) Patentinhaber: Pfandlbauer, Heinz, 5231 Schalchen (AT); Drochelmann, Martin, 37520 Osterode (DE)
(72) Erfinder: PFANDLBAUER, Hubert, 5231 Schalchen (AT)
(74) Vertreter: Hübscher & Partner Patentanwälte GmbH

(56) Entgegenhaltungen:
- DE-A1- 4 033 382
- US-A1- 2002 145 519
- US-A1- 2003 071 735
- US-A1- 2015 070 164

## Beschreibung

Die Erfindung bezieht sich auf ein Wildwarnsystem zum Verschrecken von Wild mit entlang eines Überwachungsabschnitts eines Verkehrswegs verteilten Warngeräten, die je wenigstens einen an eine Auswerteeinheit angeschlossenen Fahrzeugdetektor, je wenigstens einen durch die Auswerteeinheit beim Ansprechen des Fahrzeugdetektors eines Warngeräts ansteuerbaren Warnsignalgeber und eine an die Auswerteeinheit angeschlossene Sende- und Empfangseinrichtung zur Funkübertragung eines Steuersignals zur Betätigung des Warnsignalgebers benachbarter Warngeräte umfassen.

Um dem zu verschreckenden Wild Zeit zu geben, auf ein Warnsignal zu reagieren, ist es bekannt (US 2003/0071735 A1, WO 2013/144312 A1), bei einer Detektion eines sich nähernden Fahrzeugs nicht nur den Warnsignalgeber des Warngeräts, das dem Fahrzeugdetektor am nächsten liegt oder den Fahrzeugdetektor aufweist, sondern zugleich auch den Warnsignalgeber zumindest eines in Fahrrichtung des detektierten Fahrzeugs nachfolgenden Warngeräts zu betätigen, sodass die durch die einzelnen Warngeräte abgegebenen Warnsignale dem Fahrzeug mit Abstand vorauseilen und das Wild mit einem Sicherheitsabstand vor dem Fahrzeug verschreckt wird. Um diese kaskadenartige Auslösung der Warnsignalgeber sicherzustellen, werden die entlang eines Überwachungsabschnitts des Verkehrswegs verteilten Warngeräte miteinander beispielsweise durch ein Funknetz verbunden, um über die Sende- und Empfangseinrichtungen der einzelnen Warngeräte Steuersignale zur Ansteuerung der Warnsignalgeber senden und empfangen zu können. Die Warngeräte können dabei in einer vorgegebenen Reihenfolge mit einer zeitlichen Verzögerung Steuersignale weiterleiten (US 2003/0071735 A1) oder von einer übergeordneten Steuereinheit individuell angesteuert werden (WO 2013/144312 A1), was eine an unterschiedliche Anforderungen angepasste Steuerung und Überwachung der Warngeräte in einem Überwachungsabschnitt des Verkehrswegs erlaubt. Diese Anpassungsmöglichkeit bedingt allerdings einen erheblichen Steuerungsaufwand, weil jedem Warngerät eine eigene Kennung zugeordnet werden muss, die das Errichten eines solchen Wildwarnsystems erschwert und insbesondere beim Ersetzen oder Hinzufügen eines Warngeräts eine Adaptierung der Steuerung bedarf.

Der Erfindung liegt somit die Aufgabe zugrunde, ein Wildwarnsystem so auszugestalten, dass eine kaskadenartige Ansteuerung der einzelnen entlang eines Verkehrswegs verteilten Warngeräte zufolge eines detektierten Fahrzeugs mit einer vergleichsweise einfachen Steuerung sichergestellt werden kann. Insbesondere sollen die untereinander gleichen Warngeräte in beliebiger Reihenfolge entlang des Überwachungsabschnitts verteilt werden können, ohne in die Steuerung eingreifen zu müssen. Außerdem sollen einzelne Warngeräte ohne notwendigen Steuerungseingriff ausgetauscht oder neu hinzugefügt werden können.

Ausgehend von einem Wildwarnsystem der eingangs geschilderten Art löst die Erfindung die gestellte Aufgabe dadurch, dass die Sende- und Empfangseinrichtungen eine auf eine Teillänge des Überwachungsabschnitts des Verkehrswegs begrenzte Übertragungsreichweite aufweisen und dass die Wiederbetätigung des Warnsignalgebers für eine vorgegebene Zeitspanne durch ein Zeitglied sperrbar ist.

Da zufolge dieser Maßnahmen die Übertragungsreichweite des von den einzelnen Warngeräten zur Ansteuerung des Warnsignalgebers über Funk gesendeten Steuersignals aufgrund der gewählten Frequenz unter Berücksichtigung der Sendeleistung und der Ansprechempfindlichkeit der Empfänger auf eine Teillänge des Überwachungsabschnitts des Verkehrswegs beschränkt ist, werden beim Ansprechen des Fahrzeugdetektors eines Warngeräts nicht nur dessen Warnsignalgeber, sondern durch das zugleich gesendete Steuersignal auch die im Bereich der Übertragungsreichweite liegenden benachbarten Warngeräte angesteuert, deren Warnsignalgeber somit ebenfalls betätigt werden, falls die Betätigung der Warnsignalgeber nicht gesperrt ist. Diese Sperre gilt beispielsweise für jene Warngeräte, die vom Fahrzeug bereits passiert wurden und in denen mit dem Ansprechen des Fahrzeugdetektors ein Zeitglied ausgelöst wurde, das die Wiederbetätigung des Warnsignalgebers für eine vorgegebene Zeitspanne sperrt. Bei einer Abstimmung dieser Sperrzeit mit der Übertragungsreichweite und mit dem unteren Grenzwert eines üblichen, durchschnittlichen Geschwindigkeitsbereichs der den Überwachungsabschnitt durchfahrenden Fahrzeuge kann somit ohne zusätzlichen Steuerungsaufwand verhindert werden, dass der Warnsignalgeber eines von einem Fahrzeug bereits passierten Warngeräts durch das Steuersignal eines nachfolgend vom selben Fahrzeug aktivierten Warngeräts während der Sperrzeit wieder betätigt wird. Dies bedeutet, dass die Warnsignale dem Fahrzeug vorauseilend von den Warngeräten abgegeben werden, die jeweils innerhalb der Übertragungsreichweite des das Fahrzeug detektierenden Warngeräts liegen.

Da alle innerhalb der Übertragungsreichweite liegenden Warngeräte durch das ein Fahrzeug detektierende Warngerät mithilfe des gesendeten Steuersignals angesteuert werden, können auch Warngeräte in das Wildwarnsystem einbezogen werden, die außerhalb eines möglichen Fahrzeugdetektionsbereichs liegen. Außerdem können einzelne Warngeräte ausgetauscht, verlagert oder neu hinzugefügt werden, ohne die Steuerung anpassen zu müssen.

Geht man davon aus, dass die Warngeräte an in üblicher Weise beidseits des Verkehrswegs in angenähert gleichmäßigen Abständen vorgesehenen Straßenleitpflöcken abwechselnd auf beiden Straßenseiten angeordnet werden, so ergeben sich vorteilhafte Warnbedingungen, wenn die die Übertragungsweite bestimmende Teillänge des Überwachungsabschnitts des Verkehrswegs durchschnittlich höchstens drei Warngeräte umfasst, weil in diesem Fall die dem Fahrzeug voreilenden Warnsignale eine ausreichende Reaktionszeit für das Wild sicherstellen.

Um zu unterbinden, dass ein in einer vorgegebenen Zeitspanne nachkommendes Fahrzeug, das ebenfalls von den Warngeräten detektiert wird, das Senden von Steuersignalen auslöst, kann eine neuerliche Ansteuerung des Senders der Sendeund Empfangseinrichtungen durch ein in Abhängigkeit von der Ansteuerung des Senders angeregtes Zeitglied für die vorgegebene Zeitspanne sperrbar sein. Dies ist insbesondere für einen Kolonnenverkehr von Bedeutung, bei dem unter diesen Konstruktionsvorgaben lediglich das erste Fahrzeug die Warnsignale auslöst, nicht aber die folgenden Fahrzeuge, was auch nicht notwendig ist, weil das durch die vom ersten Fahrzeug ausgelösten Warnsignale verschreckte Wild den Verkehrsweg nicht im Bereich der Fahrzeugkolonne quert.

In der Zeichnung ist der Erfindungsgegenstand beispielsweise dargestellt. Es zeigen
- Fig. 1: ein Warngerät eines erfindungsgemäßen Wildwarnsystems in einem schematischen Blockschaltbild und
- Fig. 2: das zeitliche Ansprechen der entlang eines Überwachungsabschnitts eines Verkehrswegs verteilten Warngeräte in einem Koordinatensystem, dessen Abszisse den Abstand der einzelnen Warngeräte voneinander und dessen Ordinate die zeitliche Aufeinanderfolge der Warnsignale wiedergeben.

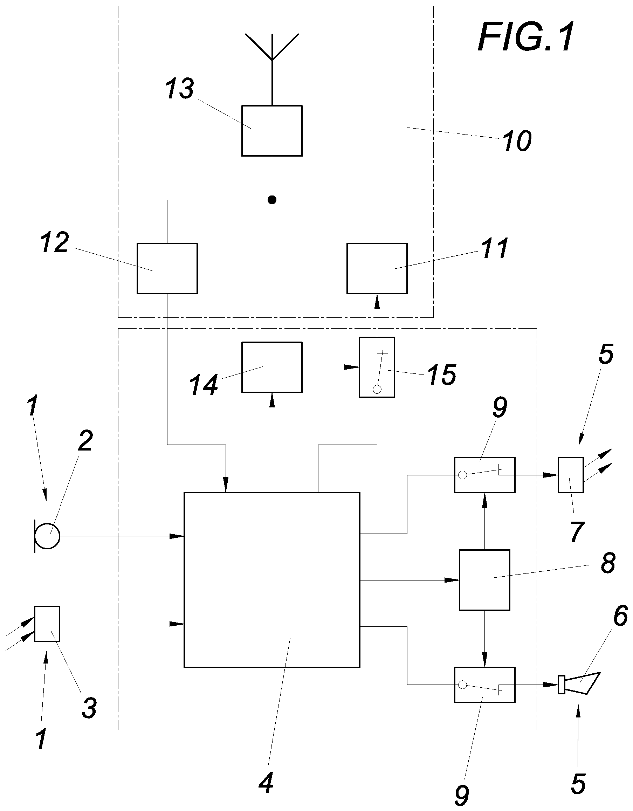

Ein erfindungsgemäßes Wildwarnsystem umfasst im Allgemeinen eine Vielzahl übereinstimmender Warngeräte, die in einem zu überwachenden Abschnitt entlang eines Verkehrswegs verteilt angeordnet sind, und zwar üblicherweise abwechselnd beidseits des Verkehrswegs. Gemäß Fig. 1 umfassen diese Warngeräte vorzugsweise zwei voneinander unabhängig wirksame Fahrzeugdetektoren 1, die beispielsweise als akustischer Empfänger 2 zur Erfassung eines sich nähernden Fahrzeugs anhand seiner Geräuschentwicklung und als insbesondere auf Scheinwerferlicht ansprechender, optoelektronischer Empfänger 3 ausgebildet sein können, um ein Fahrzeug sowohl bei Tag als auch bei Nacht detektieren zu können.

Die von den Fahrzeugdetektoren 1 erfassten Signale werden einer Auswerteeinheit 4 zugeleitet, in der anhand der empfangenen Detektorsignale entschieden wird, ob diese Signale von einem sich nähernden Fahrzeug stammen, um bei einer Fahrzeugannäherung wenigstens einen Warnsignalgeber 5 anzusteuern. Im Ausführungsbeispiel nach der Fig. 1 ist ein akustischer Signalgeber 6 und ein optischer Signalgeber 7 vorgesehen, die beide zugleich angesteuert werden, was jedoch nicht zwingend ist, weil beispielsweise die optische Warnung bei Tageslicht wegen einer geringen Wirksamkeit unterdrückt werden kann, um Energie zu sparen. Unabhängig davon wird jedoch nach einem Ansteuern zumindest eines der beiden Signalgeber 6, 7 eine Wiederbetätigung dieser Signalgeber 6, 7 für eine durch ein Zeitglied 8 vorgegebene Zeitspanne gesperrt, das nach der Betätigung zumindest eines der beiden Warnsignalgeber 5 angestoßen wird und die Steuerleitungen zu den Warnsignalgebern 5 unterbricht, was durch Öffner 9 in der Fig. 1 schematisch veranschaulicht ist. Dies bedeutet, dass die Warnsignalgeber 5 erst wieder nach Ablauf der durch das Zeitglied 8 vorgegebenen Zeitspanne betätigt werden können.

Die Warngeräte sind außerdem mit einer Sende- und Empfangseinrichtung 10 zur Funkübertragung von Steuersignalen ausgerüstet, mit deren Hilfe die Warnsignalgeber 5 zusätzlich angesteuert werden können. Diese Sende- und Empfangseinrichtung 10 umfasst einen Sender 11, einen Empfänger 12 und eine Antenne 13. Die Auslegung des Senders 11 und des Empfängers 12 sind dabei so aufeinander abgestimmt, dass die Funkverbindung eine vorgegebene begrenzte Übertragungsreichweite aufweist. Da mit der Detektion eines Fahrzeugs durch zumindest einen der beiden Fahrzeugdetektoren 1 die Auswerteeinheit 4 nicht nur die Warnsignalgeber 5, sondern auch den Sender 11 für das Steuersignal zum Betätigen der Warnsignalgeber 5 benachbarter Warngeräte ansteuert, werden diese Steuersignale von allen Warngeräten innerhalb der Übertragungsreichweite empfangen und lösen in diesen Warngeräten die Betätigung der Warnsignalgeber 5 aus, wenn die Ansteuerung dieser Warnsignalgeber 5 nicht durch das Zeitglied 8 gesperrt wird.

Um zu verhindern, dass bei jedem Ansprechen der Fahrzeugdetektoren 1 ein Steuersignal zum Betätigen der Warnsignalgeber 5 benachbarter Warngeräte gesendet wird, was insbesondere bei Kolonnenverkehr unerwünscht ist, kann dem Sender 11 der Sende- und Empfangseinrichtung 10 ebenfalls ein Zeitglied 14 zugeordnet werden, das nach einer Ansteuerung des Senders 11 eine wiederholte Ansteuerung für eine vorgegebene Zeitspanne sperrt. Diese zeitliche Sperre wird in der Fig. 1 wiederum mit einem durch das Zeitglied 14 betätigbaren Öffner 15 anschaulich gemacht.

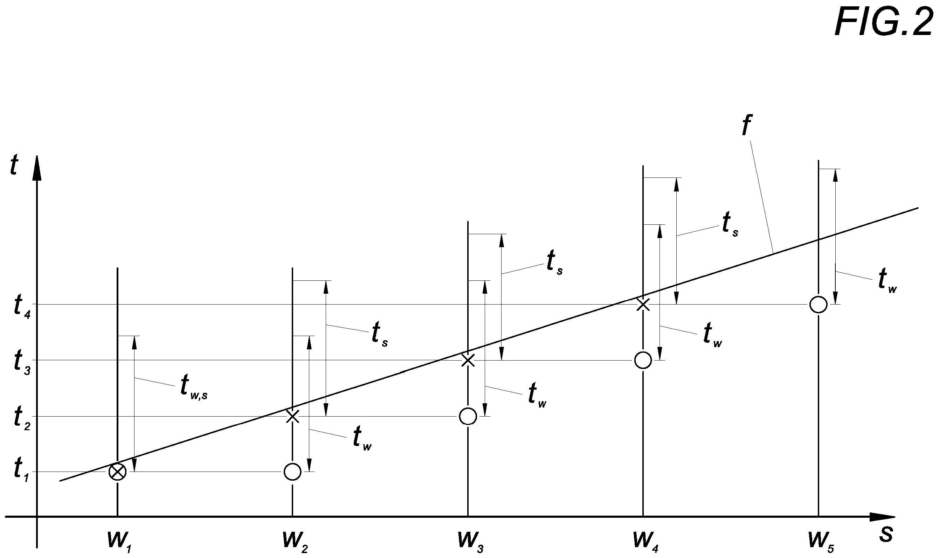

In der Fig. 2 ist auf der die Länge eines Verkehrswegabschnitts wiedergebenden Abszisse s die Lage der mit gegenseitigem Abstand angeordneten Warngeräte w angedeutet, wobei der Einfachheit halber von einem gleichmäßigen Abstand der Warngeräte w ausgegangen wird, was keinesfalls zwingend ist. Die Ordinate t stellt eine Zeitachse dar, sodass sich die zeitabhängige Bewegung eines Fahrzeugs entlang des Verkehrswegs bei konstanter Geschwindigkeit als Gerade f darstellen lässt.

Wird durch das in Fahrrichtung erste Warngerät w₁ ein sich näherndes Fahrzeug zum Zeitpunkt t₁ detektiert, so löst diese Fahrzeugdetektion zumindest einen der beiden Warnsignalgeber 5 des Warngeräts w₁ aus. Das Auslösen eines Warnsignals wird in der Fig. 2 durch einen Kreis angedeutet. Da die Auswerteeinheit 4 des Warngeräts w₁ nicht nur dessen Warnsignalgeber 5, sondern auch den Sender 11 ansteuert, wird vom Warngerät w₁ ein Steuersignal zum Auslösen der Warnsignale benachbarter Warngeräte w innerhalb der Übertragungsreichweite der Sende-Empfängereinrichtung 10 gesendet. Das Senden des Steuersignals wird in Fig. 2 durch ein Kreuz veranschaulicht.

Um für die Erklärung des Wirkprinzips einfache Voraussetzungen zu schaffen, wird im Folgenden davon ausgegangen, dass die Übertragungsreichweite des Steuersignals dem eineinhalbfachen Abstand zwischen zwei unmittelbar aufeinanderfolgenden Warngeräten w entspricht. Unter diesen Voraussetzungen wird das vom Warngerät w₁ ausgesendete Steuersignal vom Warngerät w₂, nicht aber vom Warngerät w₃ empfangen, sodass das Warngerät w₂ zum Ansprechzeitpunkt t₁ des Warngeräts w₁ ebenfalls ein Warnsignal abgibt, bevor das Fahrzeug in den Ansprechbereich dieses Warngeräts w₂ gelangt. Mit der Betätigung der Warnsignalgeber 5 des Warngeräts w₁ wird wie auch beim Warngerät w₂ die Ansteuersperre der Warnsignalgeber 5 durch das Zeitglied 8 für eine Zeitspanne t_{w} aktiviert. Wird demnach das sich dem Warngerät w₂ nähernde Fahrzeug von diesem Warngerät w₂ zum Zeitpunkt t₂ detektiert, so wird lediglich dessen Sender 11 angesteuert, nicht aber dessen Warnsignalgeber 5, weil zum Zeitpunkt t₂ die Sperrzeit für die Warnsignalgeber 5 noch nicht abgelaufen ist. Dies bedeutet, dass das Warngerät w₂ zum Ansprechzeitpunkt t₂ kein weiteres Warnsignal abgibt.

Das zum Zeitpunkt t₂ vom Warngerät w₂ gesendete Steuersignal erreicht aufgrund der vorgegebenen Übertragungsreichweite die beiden benachbarten, in Fahrrichtung vor- und nachgeordneten Warngeräte w₁ und w₃. Wegen der zum Zeitpunkt t₂ noch nicht abgelaufenen Zeitspanne t_{w}, in der die Ansteuerung der Warnsignalgeber 5 gesperrt ist, löst das vom Warngerät w₂ gesendete Steuersignal beim Warngerät w₁ kein Warnsignal aus. Eine solche Sperre ist im Warngerät w₃ jedoch noch nicht wirksam, sodass durch das Steuersignal des Warngeräts w₂ die Warnsignalgeber 5 des Warngeräts w₃ angesteuert werden und das Warngerät w₃ zum Zeitpunkt t₂ ein Warnsignal abgibt.

Dieser Ablauf wiederholt sich von Warngerät zu Warngerät, wie dies der Fig. 2 entnommen werden kann, sodass ab dem Warngerät w₂ nicht das jeweils das Fahrzeug detektierende Warngerät wᵢ, sondern das in Fahrrichtung nachgeordnete Warngerät wᵢ₊₁ für die Auslösung des Warnsignals sorgt, wie dies der Fig. 2 entnommen werden kann. Über das gefunkte Steuersignal können aber auch Warngeräte w eingesetzt werden, die aufgrund ihrer Lage gegenüber dem Verkehrsweg kein Fahrzeug auf dem Verkehrsweg detektieren können. Diese Warngeräte w müssen lediglich in der Übertragungsreichweite eines ein Fahrzeug erfassenden Warngeräts angeordnet werden.

Durch die gegenseitige Abstimmung der Übertragungsreichweite, der Verteilung der Warngeräte w entlang des zu überwachenden Abschnitts des Verkehrswegs und der gegenseitigen Abstände der Warngeräte w kann somit mit einem vergleichsweise geringen Steuerungsaufwand ein unterschiedliche Verhältnisse berücksichtigendes Wildwarnsystem errichtet werden, das nach Bedarf auch nachträglich durch ein bloßes Versetzen, Wegnehmen oder Hinzufügen einzelner Warngeräte w verändert werden kann, ohne in die Steuerung eingreifen zu müssen.

Um eine vorteilhafte Anpassung an einen Kolonnenverkehr zu erreichen, wird gemäß der Fig. 1 eine wiederholte Ansteuerung des bereits einmal angesteuerten Senders 11 durch ein Zeitglied 14 gesperrt. In der Fig. 2 ist diese Zeitspanne tₛ eingezeichnet und zeigt, dass ein nachfolgendes Fahrzeug erst dann eine neuerliche Sendung des Steuersignals bewirkt, wenn zwischen diesem und dem vorausgehenden Fahrzeug eine Zeitspanne liegt, die zumindest der durch das Zeitglied 14 bestimmten Sperrzeit entspricht. Eine solche Unterdrückung der Warnsignalauslösung ist jedoch keinesfalls zwingend.

## Patentansprüche

1. Wildwarnsystem zum Verschrecken von Wild mit entlang eines Überwachungsabschnitts eines Verkehrswegs verteilten Warngeräten (w), die je wenigstens einen an eine Auswerteeinheit angeschlossenen Fahrzeugdetektor (1), je wenigstens einen durch die Auswerteeinheit (4) beim Ansprechen des Fahrzeugdetektors (1) eines Warngeräts (w) ansteuerbaren Warnsignalgeber (5) und eine an die Auswerteeinheit (4) angeschlossene Sende- und Empfangseinrichtung (10) zur Funkübertragung eines Steuersignals zur Betätigung des Warnsignalgebers (5) benachbarter Warngeräte (w) umfassen, **dadurch gekennzeichnet, dass** die Sendeund Empfangseinrichtungen (10) eine auf eine Teillänge des Überwachungsabschnitts des Verkehrswegs begrenzte Übertragungsreichweite aufweisen und dass die Wiederbetätigung des Warnsignalgebers (5) für eine vorgegebene Zeitspanne durch ein erstes Zeitglied (8) sperrbar ist.

2. Wildwarnsystem nach Anspruch 1, **dadurch gekennzeichnet, dass** die die Übertragungsweite bestimmende Teillänge des Überwachungsabschnitts des Verkehrswegs höchstens drei Warngeräte (w) aufweist.

3. Wildwarnsystem nach Anspruch 1 oder 2, **dadurch gekennzeichnet, dass** eine neuerliche Ansteuerung des Senders (11) der Sende- und Empfangseinrichtung (10) durch ein in Abhängigkeit von der Ansteuerung des Senders (11) angeregtes, zweites Zeitglied (14) für eine vorgegebene Zeitspanne sperrbar ist.

## Claims

1. Wildlife warning system for scaring wildlife away, comprising warning devices (w) which are distributed along a monitoring section of a traffic route and comprise in each case at least one vehicle detector (1) connected to an evaluation unit, in each case at least one warning signal generator (5) which can be activated by the evaluation unit (4) upon response of the vehicle detector (1) of a warning device (w), and a transceiver device (10), which is connected to the evaluation unit (4), for radio transmission of a control signal in order to actuate the warning signal generator (5) of adjacent warning devices (w), **characterised in that** the transceiver devices (10) have a transmission range which is limited to a partial length of the monitoring section of the traffic route and **in that** the re-actuation of the warning signal generator (5) can be blocked for a specified period of time by a first timing element (8).

2. Wildlife warning system as claimed in claim 1, **characterised in that** the partial length of the monitoring section of the traffic route which determines the transmission range has a maximum of three warning devices (w).

3. Wildlife warning system as claimed in claim 1 or 2, **characterised in that** renewed activation of the transmitter (11) of the transceiver device (10) can be blocked for a specified period of time by a second timing element (14) which is excited in dependence upon the activation of the transmitter (11).

## Revendications

1. Système d'avertissement pour animaux sauvages destiné à effrayer les animaux sauvages à l'aide de dispositifs d'avertissement (w) qui sont distribués le long d'une section de surveillance d'une voie de circulation, lesdits dispositifs comprenant chacun au moins un détecteur de véhicule (1) qui est connecté à une unité d'évaluation, comprenant chacun au moins un émetteur de signaux d'avertissement (5) qui peut être déclenché par l'unité d'évaluation (4) en cas de réponse du détecteur de véhicule (1) de l'un des dispositifs d'avertissement (w), et comprenant chacun un dispositif d'émission et de réception (10) qui est connecté à l'unité d'évaluation (4) dans le but de réaliser une transmission radio d'un signal de commande pour déclencher l'émetteur de signaux d'avertissement (5) de dispositifs d'avertissement voisins (w), **caractérisé en ce que** les dispositifs d'émission et de réception (10) présentent une portée de transmission qui est limitée à une longueur partielle de la section de surveillance de la voie de circulation, et **en ce qu'**un nouveau déclenchement de l'émetteur de signaux d'avertissement (5) peut être bloqué pendant une durée prédéterminée par un premier élément de temporisation (8).

2. Système d'avertissement pour animaux sauvages selon la revendication 1, **caractérisé en ce que** la longueur partielle de la section de surveillance de la voie de circulation qui détermine la distance de transmission comprend au maximum trois dispositifs d'avertissement (w).

3. Système d'avertissement pour animaux sauvages selon la revendication 1 ou 2, **caractérisé en ce qu'**un nouveau déclenchement de l'émetteur (11) du dispositif d'émission et de réception (10) peut être bloqué pendant une durée prédéterminée par un deuxième élément de temporisation (14) dont l'activation dépend du déclenchement de l'émetteur (11).
